# EUROPÄISCHE PATENTANMELDUNG

(11) **EP 2 784 307 A1**
(43) Veröffentlichungstag der Anmeldung: **01.10.2014**
(21) Anmeldenummer: 13161619.5
(22) Anmeldetag: 28.03.2013
(51) Int. Cl.: F03D 11/00, B64D 15/16

(54) **Folie mit flüssigkeitsgefüllten Kammern, Bauteil mit einer solchen Folie und Verfahren zu deren Herstellung**

(71) Anmelder: Siemens Aktiengesellschaft, 80333 München (DE)
(72) Erfinder: Jensen, Jens Dahl, 14050 Berlin (DE); Kunert, Kathrin, 14089 Berlin (DE); Reiche, Ralph, 13465 Berlin (DE); Ullrich, Raymond, 14621 Schönwalde (DE)

(57) **Zusammenfassung**

Die Erfindung betrifft eine Folie (12), die eine Vielzahl von Kammern (18) enthält. Außerdem betrifft die Erfindung ein Bauteil (11), was mit einer Folie (12) versehen ist. Zuletzt betrifft die Erfindung ein Verfahren zur Herstellung einer solchen Folie. Die Folie (12) ist eine Funktionsfolie, die die Enteisung des Bauteils ermöglichen soll. Erfindungsgemäß sind Kammern (18) vorgesehen, in denen sich insbesondere wasserbasierte Flüssigkeiten mit unterschiedlichen Gefrierpunkten befinden. Die Kammerwände (23) werden ausgebeult, wenn sich beim Gefrieren ein Volumensprung in der Flüssigkeit vollzieht. Dabei wird das Eis (24) abgesprengt. Weiterhin ist vorgesehen, dass mehrere Flüssigkeitsarten verwendet werden, die unterschiedliche Gefrierpunkte aufweisen, so dass die Enteisungsfunktion über einen bestimmten Temperaturbereich hinweg gewährleistet ist. Es ist eine einfache Montage der Folie auf einem Bauteil wie z. B. einer Windkraftanlage (insbesondere den Rotorflügeln) möglich.

## Beschreibung

Die Erfindung betrifft eine Folie, enthaltend eine Vielzahl von Kammern, welche mit Flüssigkeit gefüllt sind. Außerdem betrifft die Erfindung ein Bauteil, welches eine vor Vereisung schützende Oberfläche aufweist. Zuletzt betrifft die Erfindung ein Verfahren zum Erzeugen einer Folie mit einer Vielzahl von Kammern.

Folien der eingangs angegebenen Art sind beispielsweise aus der EP 1 987 207 B1 bekannt. Bei dieser Folie handelt es sich um eine sogenannte Anti-Dröhn-Folie. Diese Folie weist flüssigkeitsgefüllte Kammern auf und kann auf eine Fläche appliziert werden. Bei einer Montage beispielsweise auf einer Dachfläche lässt sich das Geräusch herabfallender Regentropfen dämpfen.

Allgemein ist es auch bekannt, Oberflächen vor Vereisung zu schützen. Hierzu kann gemäß der EP 2 248 607 A1 beispielsweise eine Beschichtung zum Einsatz kommen, in die Glykopeptide eingelagert sind. Diese verhindern oder verlangsamen das Wachstum von Eiskristallen auf der Oberfläche der Beschichtung. Bei ungünstigen Bedingungen lässt sich eine Vereisung mittels dieser Beschichtung allerdings nicht verhindern.

Die Aufgabe der Erfindung besteht daher darin, eine Möglichkeit zu schaffen, die Vereisung von Oberflächen vergleichsweise wirksam zu verhindern.

Diese Aufgabe wird mit der eingangs angegebenen Folie erfindungsgemäß dadurch gelöst, dass die Kammern in der Folie mehrere abgeschlossene Hohlräume ausbilden. Diese Hohlräume sind mit mehreren Flüssigkeitsarten gefüllt, derart, dass jeder Hohlraum mit genau einer der Flüssigkeitsarten gefüllt ist. Damit ist gemeint, dass die Flüssigkeitsarten nicht in den Hohlräumen gemischt werden, sondern dass in jedem der Hohlräume eine der verwendeten Flüssigkeitsarten enthalten ist. Da die Hohlräume untereinander abgeschlossen sind, kann es auch später nicht zu einer Vermischung der Flüssigkeitsarten kommen.

Erfindungsgemäß haben die Flüssigkeitsarten zwar die Gemeinsamkeit, dass ein Wechsel zwischen den Aggregatzuständen mit einem Volumensprung verbunden ist. Allerdings unterscheiden sich die Flüssigkeitsarten dadurch, dass diese unterschiedliche Gefrierpunkte aufweisen. Hierdurch lässt sich vorteilhaft ein mechanischer Enteisungsmechanismus der Folie ausnutzen, wie dieser im Folgenden näher beschrieben wird.

Dadurch, dass die Flüssigkeitsarten unterschiedliche Gefrierpunkte aufweisen, wird vorteilhaft weiterhin gewährleistet, dass sich der beschriebene Effekt einer Verformung der Folienoberfläche über einen gewissen Temperaturbereich sukzessive vollzieht. Dadurch kann gewährleistet werden, dass nicht nur eine Vereisung verhindert wird, wenn Flüssigkeitsfilme auf der Oberfläche bei Unterschreiten der Gefriertemperatur erstarren, sondern dass auch ein Absprengen von Eis auch gewährleistet ist, wenn bei geringeren Temperaturen der Folienoberfläche unterhalb des Gefrierpunkts beispielsweise Sprühregen auf der Oberfläche gefriert. Es ist lediglich eine Temperaturänderung erforderlich, die beispielsweise im eben dargestellten Fall dadurch erreicht wird, dass der Regen die Oberfläche erwärmt, dabei gefriert, jedoch gleichzeitig einzelne der Kammern zu einem Wechsel des Aggregatzustands veranlasst und auf diese Weise eine den Absprengungseffekt des Eises auslösende Volumenänderung hervorruft.

Natürlich kann mit der erfindungsgemäßen Folie nicht nur die Ausbildung von Wassereis verhindert werden, obwohl hierin sicherlich der wichtigste Anwendungsfall besteht. Durch Auswahl geeigneter Flüssigkeitsarten lassen sich auch andere Gefrierpunkte realisieren, wie sie beispielsweise als Verhinderung einer Vereisung in der Kryotechnik. So kann ein Volumensprung beispielsweise auch bei Raumtemperatur gasförmig vorliegenden Substanzen N₂, NO, N₂O, CO₂ und CO festgestellt werden.

Als Folie im Sinne der Erfindung soll ein flexibler Körper verstanden werden, der im Verhältnis zu seiner Flächenausdehnung dünn ist. Die Folie ist flexibel, d. h., dass diese biegeschlaff ist und so auch bestimmten Konturen eines Bauteils folgen kann, auf die sie appliziert wurde, auch wenn diese Oberfläche nicht eben ist. Das biegeschlaffe Verhalten hat die Folie einer Dehnbarkeit zu verdanken, welche eine elastische Verformung in gewissen Grenzen erlaubt. Diese Dehnbarkeit ist vor allem auch für die Funktionsweise des Enteisungsmechanismus verantwortlich. Dieser hängt nämlich mit dem Volumensprung zusammen, dem die Flüssigkeitsarten in den Hohlräumen beim Erstarren bzw. Schmelzen unterworfen sind. Als Volumensprung bezeichnet man einen physikalischen Effekt, der bei dem angegebenen Wechsel des Aggregatzustands (in beiden Richtungen) eine sprunghafte Änderung der Dichte der betreffenden Substanz (Flüssigkeit bzw. deren erstarrte Form) hervorruft. Der Volumensprung kann also auch als Dichtesprung bezeichnet werden, wobei der Begriff "Volumensprung" auf das Volumen der betreffenden Kammer abzielt, während der Begriff "Dichtesprung" auf eine Eigenschaft der verwendeten Flüssigkeit abzielt.

Die Folie ist so ausgelegt, dass die unterschiedlichen Gefrierpunkte der Flüssigkeitsarten in dem Temperaturbereich liegen, in dem die Folie zum Einsatz kommt. Zu einem Wechsel der Aggregatzustände fest und flüssig kommt es bei den Flüssigkeitsarten bei unterschiedlichen Temperaturen, so dass in den einzelnen Kammern regelmäßig Volumensprünge stattfinden. Hierdurch kann vorteilhaft eine Vereisung der Oberfläche oberhalb der Folie auf mechanischem Wege dahingehend verhindert werden, dass der Volumensprung der Flüssigkeiten zu einer örtlichen Verformung der Folie aufgrund ihrer Dehnbarkeit führt. Das spröde Eis wird auf diesem Wege von der Oberfläche der Folie abgesprengt. Vorteilhaft kann damit insbesondere die Vereisung mit Wassereis verhindert werden, wobei die zum Einsatz kommenden Flüssigkeitsarten als Hauptbestandteil Wasser aufweisen. Wasser weist vorteilhaft einen vergleichsweisen großen Volumensprung im Gefrierpunkt von ca. 10 % auf und kann deswegen vorteilhaft besonders wirkungsvoll als Flüssigkeit in den Kammern verwendet werden. Die unterschiedlichen Gefrierpunkte der Flüssigkeiten werden durch im Wasser gelöste Stoffe eingestellt. Hierbei wird der physikalische Effekt ausgenutzt, dass sich der Gefrierpunkt einer Flüssigkeit durch Zumischung anderer Flüssigkeiten absenken lässt. Dabei hängt es nun von dem Gehalt und der chemischen Zusammensetzung der jeweiligen Flüssigkeit ab, wie stark diese Absenkung des Gefrierpunkts ausfällt. Dieser lässt sich durch Auswahl geeigneter Lösungsbestandteile im Wasser (oder in einer anderen Referenzflüssigkeit) vorteilhaft genau einstellen. Dem Wasser können gemäß einer besonderen Ausgestaltung der Erfindung insbesondere Salze oder Alkohole zugegeben werden. Vorteilhaft können unter den Salzen und Alkoholen Substanzen ausgewählt werden, die hinsichtlich ihrer Umweltverträglichkeit unbedenklich sind. Dies ist insbesondere bei einem Einsatz der erfindungsgmäßen Folie unter atmosphärischen Bedingungen besonders vorteilhaft. Sollte die Folie einmal beschädigt werden, so entsteht dadurch kein Umweltschaden. Insbesondere der Einsatz unter atmosphärischen Bedingungen ist insofern besonders attraktiv, weil sich hier die unterschiedlichsten Problematiken durch Vereisung ergeben.

Gemäß einer vorteilhaften Ausgestaltung der Erfindung kann die Folie folgendermaßen aufgebaut sein. Diese besteht aus einer Sandwich-Struktur, die zumindest eine die Hohlräume der Kammern aufweisende Kammerlage und eine die Hohlräume auf einer ersten Seite der Kammerlage verschließende erste Decklage aufweist. Als Kammerlage im Sinne der Erfindung ist eine Lage der Folie zu verstehen, die an der Ausbildung der Hohlräume, die die Kammern bilden, beteiligt ist. Vorteilhaft befindet sich zumindest der größte Teil der Hohlräume in dieser Kammerlage, was durch das Vorsehen von Kavitäten gewährleistet wird. Diese Kavitäten sind aber zumindest zu einer Seite der Kammerlage gemäß dieser Ausführung offen und müssen durch eine Decklage verschlossen werden. Diese liegt auf der ersten Seite, welches eben die Seite ist, nach der sich die Hohlräume in der Kammerlage öffnen. Der beschriebene Aufbau der Folie hat den Vorteil, dass sich die Folie auf einfache Weise herstellen lässt. Die Kammern können in die Folie urformtechnisch oder durch Heißprägen eingebracht werden. Anschließend werden diese durch die Decklage verschlossen.

Gemäß einer weiteren Ausgestaltung der Erfindung ist vorgesehen, dass die Kammerlage von der ersten Seite zur gegenüberliegenden zweiten Seite reichende Durchbrüche als Kammern aufweist. Diese lassen sich vorteilhaft besonders einfach fertigen, indem die Hohlräume als Durchbrüche in eine Folie als Halbzeug hineingestanzt werden. Anschließend müssen allerdings die Durchbrüche auf beiden Seiten der Kammerlage verschlossen werden. Hierzu wird neben der bereits angegebenen ersten Decklage auf der ersten Seite der Kammerlage auch eine zweite Decklage auf der zweiten Seite der Kammerlage benötigt. Ein weiterer Vorteil dieser Ausführung ist, dass im Vergleich zum Materialaufwand des Folienmaterials vergleichsweise große Kammern hergestellt werden können. Beispielsweise können die Durchbrüche die Form von Waben aufweisen, wobei die Kammerlage bei dieser Ausführung der Erfindung dann nur noch aus den Stegen besteht, die zwischen den einzelnen Waben befindlich sind. Diese müssen eine Wandstärke aufweisen, die im Verhältnis zur Dicke der Kammerlage eine genügende Stabilität der Wände gewährleisten, damit diese mit den beiden Decklagen dichtend verbunden werden kann (beispielsweise durch Verschweißen oder durch Kleben). Selbstverständlich können die Kammern auch in anderen regelmäßigen Mustern angeordnet werden. Regelmäßige Anordnungsmuster haben den Vorteil, dass die Folie über die Fläche mit gleichbleibenden Eigenschaften ausgestattet ist. Außerdem lässt sich auf diesem Wege eine hohe Qualität bei der Fertigung erreichen. Alternative Muster, nach denen die Kammern angeordnet sein können, basieren beispielsweise auf Quadraten oder gleichseitigen Dreiecken.

Gemäß einer besonderen Ausgestaltung der Erfindung ist vorgesehen, dass von den Kammern in Richtung hin zu einer der Seiten der Folie Füllkanäle ausgehen, die durch eine die betreffende Seite bildende Verschlusslage abgedichtet sind. Anders ausgedrückt wird die Folie mit ihren Kammern zunächst derart hergestellt, dass diese über die genannten Füllkanäle von einer der beiden Seiten zugänglich sind. Über diese Kanäle können die Kammern nach Herstellung dieses Folienrohkörpers befüllt werden. Dabei ist es auch möglich, dass die Kanäle erst bei der Befüllung entstehen, indem z. B. eine Kanüle von einer Seite in Folie hineingestochen wird. Um anschließend eine zuverlässige Dichtung zu erzeugen, wird nach abgeschlossener Befüllung der Kammern die Verschlusslage auf die Decklage aufgebracht. Hierbei steht vorteilhaft eine große Fläche zur Dichtung zur Verfügung. Die Verschlusslage kann beispielsweise aufgeklebt werden. Eine andere Möglichkeit ist eine thermische Verschweißung.

Wenn die Kammern in einem Wabenmuster oder einem anderen Muster angeordnet sind, ist es besonders vorteilhaft, wenn die verschiedenen Flüssigkeitsarten ebenfalls nach einem periodischen Muster auf die Kammern verteilt sind. Gibt es beispielsweise vier verschiedene Flüssigkeitsarten, so sind diese beispielsweise derart auf die Kammern zu verteilen, dass jeweils vier benachbarte Kammern ein Befüllungsmuster ergeben, was sich in benachbarten Viererkombinationen der Kammern wiederholt. Solche Muster lassen sich selbstverständlich auch bei anderen Anzahlen an Flüssigkeitsarten finden. Der Vorteil eines solchen Anordnungsmusters ist, dass sich der Effekt eines temperaturabhängigen Verformens der Oberfläche über den gesamten Flächenbereich der Folie gleich verhält.

Alternativ wird die Erfindung auch durch das eingangs angegebene Bauteil dadurch gelöst, dass dieses eine vor Vereisung zu schützende Oberfläche aufweist, die zumindest teilweise durch die oben bereits beschriebene Folie gebildet wird. Hierbei kann es sich vorteilhaft beispielsweise um das Rotorblatt einer Windturbine handeln. Dieses ist im Winter Witterungsbedingungen ausgesetzt, die eine Vereisung der Rotorblätter zur Folge haben können. Eine Eisbildung auf der Oberfläche von Rotorblättern hat den Nachteil, dass der Wirkungsgrad des umströmten Profils verringert wird. Außerdem kann die Massenzunahme aufgrund des Eigengewichts des Eises dazu führen, dass die Windkraftanlage beschädigt wird oder der Betrieb der Windkraftanlage eingestellt werden muss, um Beschädigungen zu vermeiden. Ähnliche Probleme können sich auch bei anderen strömungstechnisch optimierten Bauteilen, wie Flugzeugflügeln ergeben. Der erfindungsgemäße Einsatz der Folie vermag eine Eisbildung zwar nicht zu unterbinden, jedoch das gebildete Eis in regelmäßigen Abständen von der Oberfläche zu sprengen. Hierdurch können die Auswirkungen einer Eisbildung erfindungsgemäß vorteilhaft auf ein Maß begrenzt werden, welches für den entsprechenden Anwendungsfall ungefährlich ist.

Zuletzt wird die eingangs angegebene Aufgabe erfindungsgemäß auch durch ein Verfahren gelöst, bei dem folgende Schritte durchlaufen werden. Zur Ausbildung von Kammern in einer Folie wird in dieser eine Vielzahl von Hohlräumen hergestellt. Dies kann, wie bereits beschrieben, durch mehrlagiges Herstellen der Folie erreicht werden. Hierbei kommen eine Kammerlage und mindestens eine Decklage zum Einsatz. Eine andere Möglichkeit besteht darin, einen geschlossenporigen Schaum herzustellen, wobei hierbei unregelmäßige Hohlräume entstehen. In einem nächsten Schritt werden die Hohlräume über Füllkanäle mit jeweils einer von mehreren Flüssigkeitsarten befüllt. Dies bedeutet, dass in jedem Hohlraum genau eine Flüssigkeitsart vorhanden ist. Da die Hohlräume gegenseitig voneinander abgedichtet sind, kommt es auch nicht zu einer Durchmischung der Flüssigkeitsarten. Anschließend werden die Hohlräume verschlossen, die durch die abgeschlossenen Kammern entstehen. Die Flüssigkeitsarten haben, wie bereits oben genauer erläutert, die Gemeinsamkeit, dass ein Wechsel zwischen den Aggregatzuständen fest und flüssig in beiden Richtungen mit einem Volumensprung verbunden ist. Die Flüssigkeiten unterscheiden sich jedoch darin, dass diese unterschiedliche Gefrierpunkte aufweisen. Mit dem Verfahren lässt sich die eingangs bereits beschriebene Folie erzeugen, welche vorteilhaft insbesondere zur Verhinderung einer Vereisung von Oberflächen verwendet werden kann. Die Folie hat aufgrund ihrer mechanischen Eigenschaften auch weitere Vorteile, und wirkt dämpfend beispielsweise auf die Aufschlaggeräusche von Regentropfen. Dieser Effekt kann bei dem Einsatz unter atmosphärischen Bedingungen vorteilhaft zusätzlich ausgenutzt werden.

Gemäß einer Ausgestaltung des Verfahrens ist vorgesehen, dass schon vor dem Befüllen mit einer der Flüssigkeitsarten abgeschlossene Hohlräume gebildet werden. Das Befüllen erfolgt dann mit einer Kanüle, welche unter Ausbildung der Füllkanäle in die Hohlräume hineingestochen wird. Hierbei entstehen vorteilhaft Füllkanäle mit kleinem Querschnitt, die sich nach dem Befüllen aufgrund der Elastizität des Folienmaterials fast wieder verschließen. Um eine endgültige Dichtung der Füllkanäle vorzunehmen, können diese entweder verklebt oder thermisch verschlossen werden. Eine andere Möglichkeit besteht darin, eine Abdichtfolie über die Fläche zu ziehen, welche zur Befüllung mittels der Kanüle zur Verfügung gestanden hat. Diese Abdichtlage der Folie kann beispielsweise mit letzterer verklebt oder thermisch verschweißt werden.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Es zeigen:
- Figur 1: ein Ausführungsbeispiel des erfindungsgemäßen Bauteils als Ausschnitt,
- Figur 2: ein Ausführungsbeispiel der erfindungsgemäßen Folie aus Ausschnitt,
- Figur 3: ein Ausführungsbeispiel für die Verteilung der Flüssigkeitsarten auf ein wabenförmiges Muster, wobei die kleinste, das Muster wiedergebende Kombination schematisch dargestellt ist,
- Figur 4 bis 7: einen Flächenausschnitt der erfindungsgemäßen Folienoberfläche mit einer Verteilung an Kammern gemäß Figur 3 in dreidimensionaler Darstellung bei unterschiedlichen Temperaturen,
- Figur 8: ein anderes Ausführungsbeispiel als Alternative zu Figur 3 mit einer anderen Verteilung der Flüssigkeitsarten und
- Figur 9 und 10: ausgewählte Verfahrensschritte eines Ausführungsbeispiels des erfindungsgemäßen Verfahrens schematisch.

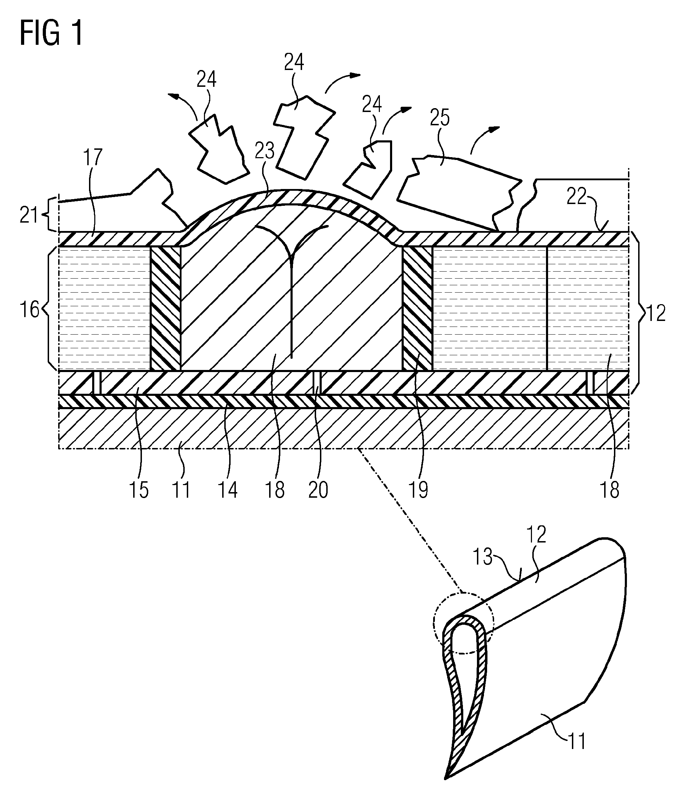

In Figur 1 ist als Bauteil ein Rotorblatt 11 dargestellt, welches mit einer erfindungsgemäßen Folie 12 ausgestattet ist. Diese Folie 12 befindet sich an der Anströmkante 13 des Rotorblattes, an der sich eventuelle Vereisungen besonders kritisch auf die Strömungseigenschaften des Profils des Rotorblatts 11 auswirken.

Wie einer Ausschnittvergrößerung zu entnehmen ist, ist die Folie 12 mit einer Klebeschicht 14 auf dem Rotorblatt 11 montiert. Die Folie 12 selbst besteht aus einer Sandwich-Struktur, die als Grundkörper eine Kammerlage 16 aufweist, die mit einer ersten Decklage 15 und einer zweiten Decklage 17 verschlossen ist. In der Kammerlage sind Kammern 18 dadurch ausgebildet, dass in der Kammerlage 16 sechseckige Durchgangslöcher vorgesehen sind, die jeweils durch Stege 19 voneinander getrennt werden. Die Öffnungen der Durchbrüche sind mit der ersten Decklage 15 und der zweiten Decklage 17 dicht verschlossen, so dass die Kammern 18 fluidisch unabhängig voneinander sind. Diese Kammern 18 wurden über Füllkanäle 20 mit verschiedenen Flüssigkeitensarten befüllt, die alle als Hauptbestandteil Wasser aufweisen. Anschließend wurde die Folie 12 auf das Rotorblatt 11 geklebt, wobei die Klebeschicht 14 gleichzeitig zur zuverlässigen Abdichtung der Füllkanäle 20 dient.
Der Figur 1 lässt sich auch der Mechanismus des mechanischen Enteisungseffekts entnehmen. Dargestellt ist eine Eisschicht 21, welche sich auf der Oberfläche der Folie 12 befindet, die dem Rotorblatt abgewandt ist. Die Temperatur, die gemäß Figur 1 herrscht, führt dazu, dass die Flüssigkeit einer Kammer gefriert, was aufgrund des großen Wasseranteils in der Flüssigkeit zu einem Volumensprung in der betreffenden Kammer von ca. 10% führt. Deswegen wölbt sich in dieser Kammer die Decklage 17 zu einer Beule 23 aus, wodurch ein Hügel in der Oberfläche 22 entsteht. Dies führt dazu, dass die Eisschicht in Scherben 24 abfällt und aufgrund der Sprödheit des Eises auch benachbarte Schichtbereiche 25 abplatzen.

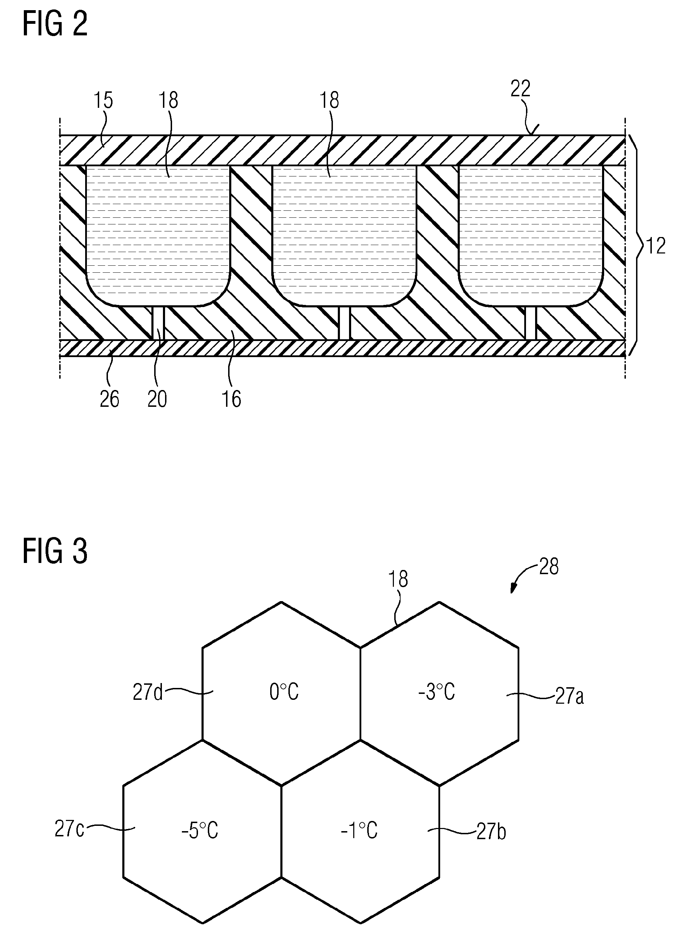

In Figur 2 ist eine andere Ausgestaltung der Folie 12 zu sehen. Hier ist eine Kammerlage 16 vorgesehen, in der die Kammern 18 durch napfartige Vertiefungen gebildet sind. Daher sind diese Kammern nur zu einer Seite der Kammerlage 16 offen. Auf dieser Seite ist eine Decklage 15 zum Abschluss der Kammern vorgesehen. Auf der gegenüberliegenden Seite befinden sich die Füllkanäle 20. Damit diese zuverlässig abgedichtet werden, ist eine Verschlusslage 26 vorgesehen, welche allerdings nicht als Abschluss für die ausgebildeten Kammern 18 notwendig wäre. Ein Verschluss der Füllkanäle 20 könnte alternativ statt mit einer Verschlusslage 26 auch beispielsweise durch thermisches Verschweißen oder mittels eines Klebstoffs erfolgen (nicht näher dargestellt). Da zum Verschluss der Füllkanäle 20 eine gesonderte Verschlusslage 26 zum Einsatz kommt, ist es nicht erforderlich, die Folie 12 mit der die Füllkanäle 20 aufweisenden Seite auf einem Bauteil zu platzieren (wie in Figur 1). Diese kann auch die Oberfläche bilden, wobei die Verschlusslage 26 hierbei zusätzliche Funktionen übernehmen kann. Diese kann beispielsweise in der eingangs genannten Art mit Partikeln oder Molekülen versehen sein (nicht dargestellt), die die Eisbildung von vornherein verlangsamen. Auf diese Weise können die erfindungsgemäßen Enteisungsmaßnahmen (mechanisch) mit bereits bekannten Enteisungsmaßnahmen (Verhinderung eines Eiskristall-Wachstums) kombiniert werden. Solche Partikel können auch in der Decklage 17 gemäß Figur 1 vorgesehen werden.

In Figur 3 sind vier wabenförmige Kammern schematisch als Aufsicht dargestellt. Diese vier Kammern sind mit vier unterschiedlichen Flüssigkeitsarten 27a, 27b, 27c und 27d befüllt. Diese Flüssigkeitsarten unterscheiden sich in ihrem Gefrierpunkt, der in Figur 3 angedeutet ist. Die Flüssigkeitsart 27d gefriert bei 0°C (reines Wasser), die Flüssigkeitsrat 27b bei -1°C, die Flüssigkeitsart 27a bei -3°c und die Flüssigkeitsart 27c bei -5°C. Mit diesen vier Flüssigkeitsarten lässt sich daher der mechanische Enteisungseffekt in einem Temperaturbereich von 5°C ausnutzen. Hierfür ist ein elementares Muster von vier Zellen, wie in Figur 3 dargestellt, notwendig, wobei sich dieses Anordnungsmuster in nicht dargestellter Weise zu allen Seiten wiederholt.

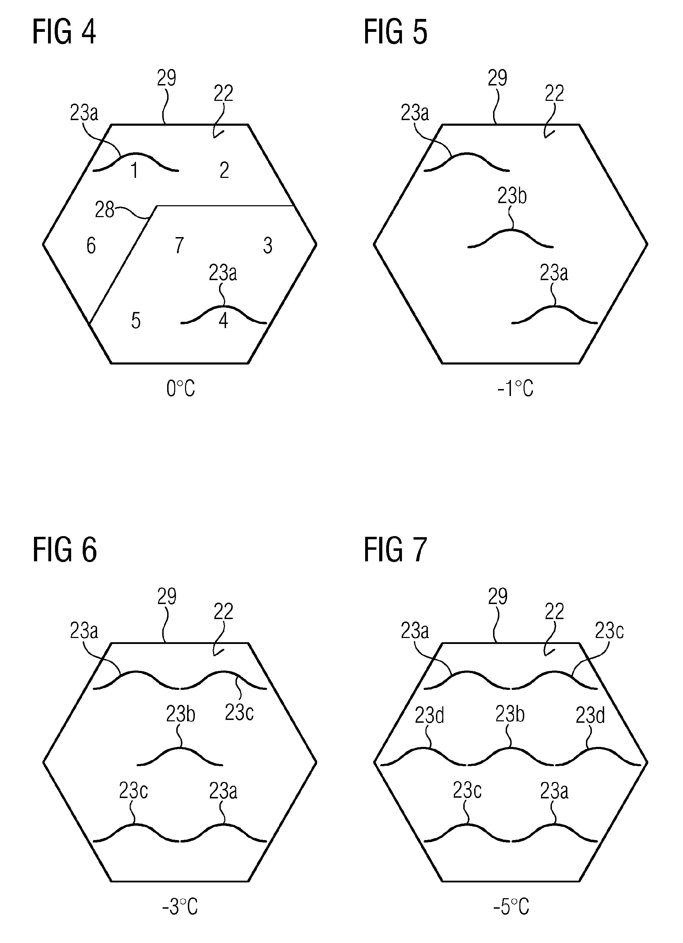

Das Anordnungsmuster gemäß Figur 3 bildet damit ein Flächenelement 28, welches in den Figuren 4 bis 7 einen Teil eines sechseckigen Ausschnitts 29 der Oberfläche 22 einer nicht näher dargestellten Folie bildet. In diesem Flächenabschnitt 29 befinden sich somit sieben wabenartige Kammern, wobei diese Kammern zumindest in Figur 4 durch die Zahlen 1 bis 7 angedeutet sind. Das Flächenelement 28 gemäß Figur 3 wird demnach durch die Zellen mit den Nummern 3, 4, 5 und 7 gebildet.

Den Figuren 4 bis 7 lässt sich weiterhin entnehmen, wie bei fortschreitender Abkühlung in der Oberfläche abhängig von der Verteilung der Flüssigkeitsarten sukzessive immer mehr Beulen ausgebildet werden, die zu einem mechanischen Absprengen der sich ausbildenden Eisschicht führen. Die betreffenden Temperaturen sind jeweils in den Figuren vermerkt. Bei 0°C gemäß Figur 4 entstehen die Beulen 23a. Bei -1°C gemäß Figur 5 kommt die Beule 23b hinzu. Bei -3°C gemäß Figur 6 entstehen die Beulen 23c und bei -5°C gemäß Figur 7 die Beulen 23d. Bei einer weiteren Abkühlung stehen bei dem Ausführungsbeispiel gemäß der Figuren 3 bis 7 keine weiteren Flüssigkeitsarten mehr zur Verfügung, so dass der Enteisungseffekt der Oberfläche 22 bei Temperaturen von -5°C ausgereizt ist.

Allerdings können auch mehr als vier Flüssigkeitsarten zum Einsatz kommen. Dies wird erreicht, indem zwei unterschiedliche Flächenelemente zum Einsatz kommen, die mit A und B bezeichnet sind. In jedem der Flächenelemente A, B können jeweils vier Flüssigkeitsarten zum Einsatz kommen. Die Flächenelemente A, B entsprechen geometrisch den in Figur 3 dargestellten, nur dass andere Flüssigkeitsarten verwendet werden. In den Flächenelementen A werden die Flüssigkeitsarten für Gefrierpunkte von -2°C, -6°C, -10°C und -12°C verwendet. In den Flächenelementen B werden die Flüssigkeitsarten für Gefrierpunkte von 0°C, -4°C, -8°C und -14°C verwendet. Um trotz der Verwendung zweier unterschiedlicher Flächenelemente eine gleichmäßige Verteilung der Beulen über die der Oberfläche zu erreichen, sind die beiden Flächenelemente jeweils im Schachbrettmuster angeordnet. Das Schachbrettmuster ist durch strichpunktierte Linien angedeutet. Die entstehenden Felder sind jeweils mit den Buchstaben A und B gekennzeichnet, um anzudeuten, nach welchem Muster die Flächenelemente A, B auf der Fläche fortgeführt werden.

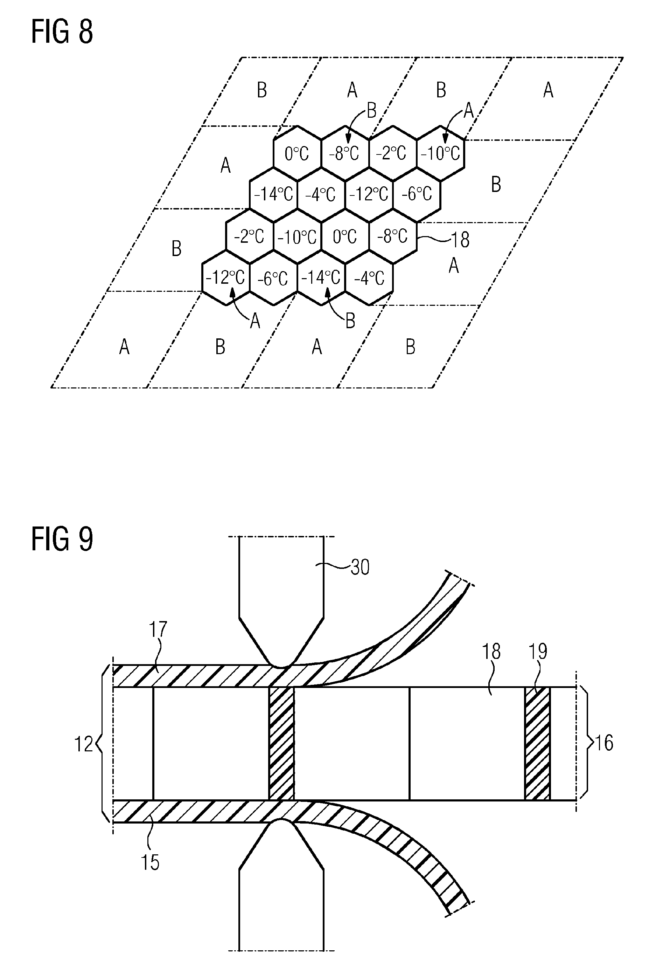

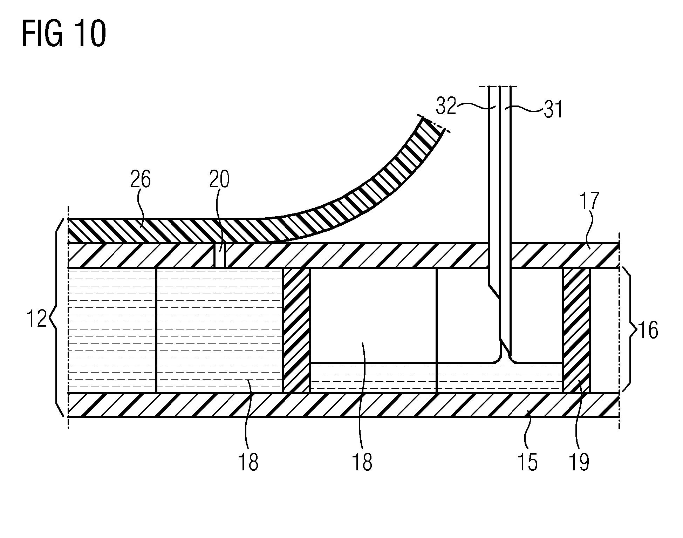

Den Figuren 9 und 10 lässt sich ein Verfahren zur Herstellung der erfindungsgemäßen Folie entnehmen, wobei nur exemplarische Fertigungsschritte dargestellt sind.

Der Figur 9 lässt sich der Herstellungsprozess bis zur Fertigstellung der ungefüllten Kammern 18 entnehmen. Zunächst wird die Kammerlage 16 hergestellt, die, wie bereits vorher beschrieben, Durchbrüche zur Bildung der Kammern aufweist, die zu beiden Seiten offen sind. Diese können beispielsweise durch Stanzen hergestellt werden, wobei hierfür eine Rolle mit einer geeigneten Stanzmatrix zum Einsatz kommen kann. Die Herstellung mit Rollen ermöglicht vorteilhaft eine kostengünstige großtechnische Herstellung, bei der die Folie als Endloshalbzeug hergestellt wird. Das Produkt besteht dann aus langen Bahnen. Da die Durchbrüche auf beiden Seiten der Kammerlage 16 offen sind, muss diese durch die Decklagen 15, 17 verschlossen werden. Diese können in einem Rollenprozess auf die Oberseite und Unterseite der Kammerlage 16 aufgebracht werden. Um ein dichtendes Verbinden zwischen den Lagen zu gewährleisten, kann ein Werkzeug 30 Verwendung finden, welches die Decklagen 15, 17 mit den Stegen 19 verschweißt. Dieses Werkzeug kann ebenfalls auf einer Rolle untergebracht werden und die Wabenform der Stege 19 nachbilden.

Eine nicht dargestellte alternative Ausgestaltung sieht vor, dass die Stege 19 der Kammerlage 16 mit den Decklagen 15, 17 verklebt werden. Hierzu kann beispielsweise auf die Stege 19 eine Komponente eines Zweikomponentenklebers aufgebracht werden, während auf die jeweils mit den Stegen zusammenkommende Seite der Decklagen 15, 17 die andere Komponente aufgebracht wird.

In Figur 10 ist zu erkennen, wie die leeren Kammern 18 mit den Flüssigkeitsarten befüllt werden können. Hierzu wird eine Kanüle 31 verwendet, die zusätzlich eine Entlüftung 32 aufweist. Die Entlüftung dient einer blasenfreien Befüllung der Kammern 18 mit der entsprechenden Flüssigkeitsart. Nachdem die Kammern befüllt sind, wird die Kanüle wieder aus der Decklage 17 herausgezogen, die zum Zwecke der Befüllung vorher durchstochen worden ist. Es verbleibt ein Füllkanal 20, welcher allerdings sehr eng ist, so dass bei der weiteren Handhabung des Folienrohlings nach der Befüllung die Gefahr eines Austretens einer der Flüssigkeitsarten sehr gering ist. Um eine vollständige Dichtung zu gewährleisten, wird auf die Decklage 17 anschließend die Verschlusslage 26 aufgebracht, die beispielsweise mit der Decklage 17 verklebt werden kann. Das so entstandene Folienhalbzeug kann zum Zwecke der Montage auf einer Oberfläche von einem Bauteil beliebig zerschnitten werden und zur Erleichterung der Montage auf einer Seite mit einer Klebeschicht (nicht dargestellt) versehen werden.

## Patentansprüche

1. Folie (12), enthaltend eine Vielzahl von Kammern (18), welche mit Flüssigkeit gefüllt sind,
**dadurch gekennzeichnet,**
**dass**
- die Kammern (18) mehrere abgeschlossene Hohlräume ausbilden und
- die Hohlräume mit mehreren Flüssigkeitsarten (27a, 27b, 27c, 27c) gefüllt sind, derart, dass jeder Hohlraum mit genau einer der Flüssigkeitsarten (27a, 27b, 27c, 27c) gefüllt ist,
- wobei die Flüssigkeitsarten (27a, 27b, 27c, 27c) die Gemeinsamkeit haben, dass ein Wechsel zwischen den Aggregatzuständen fest und flüssig mit einem Volumensprung verbunden ist und
- wobei die Flüssigkeitsarten (27a, 27b, 27c, 27c) sich dadurch unterscheiden, dass diese unterschiedliche Gefrierpunkte aufweisen.

2. Folie (12) nach Anspruch 1,
**dadurch gekennzeichnet,**
**dass** zumindest ein Teil der Flüssigkeitsarten (27a, 27b, 27c, 27c) als Hauptbestandteil Wasser aufweisen, wobei die unterschiedlichen Gefrierpunkte durch im Wasser gelöste Stoffe eingestellt sind.

3. Folie (12) nach Anspruch 2,
**dadurch gekennzeichnet,**
**dass** als Stoffe im Wasser Salze oder Alkohole gelöst sind.

4. Folie (12) nach einem der voranstehenden Ansprüche,
**dadurch gekennzeichnet,**
**dass** die Folie (12) aus einer Sandwich-Struktur besteht, die zumindest eine die Hohlräume der Kammern (18) aufweisende Kammerlage (16) und eine die Hohlräume auf einer ersten Seite der Kammerlage (16) verschließende erste Decklage (15) aufweist.

5. Folie (12) nach Anspruch 4,
**dadurch gekennzeichnet,**
**dass** die Kammerlage (16) von der ersten Seite zu der gegenüberliegenden zweiten Seite reichende Durchbrüche als Kammern (18) aufweist, und dass diese Durchbrüche auf der zweiten Seite durch eine zweite Decklage (17) verschlossen sind.

6. Folie (12) nach einem der voranstehenden Ansprüche,
**dadurch gekennzeichnet,**
**dass** von den Kammern (18) in Richtung hin zu einer der Seiten der Folie (12) Füllkanäle ausgehen, die durch eine die betreffende Seite bildende Verschlusslage (26) abgedichtet werden.

7. Folie (12) nach einem der voranstehenden Ansprüche,
**dadurch gekennzeichnet,**
**dass** die Kammern (18) in einem regelmäßigen Muster angeordnet sind.

8. Folie (12) nach Anspruch 7,
**dadurch gekennzeichnet,**
**dass** die Kammern (18) in einem Wabenmuster angeordnet sind und den Querschnitt von regelmäßigen Sechsecken oder einen Kreisquerschnitt aufweisen.

9. Folie (12) nach einem der Ansprüche 7 oder 8,
**dadurch gekennzeichnet,**
**dass** die verschiedenen Flüssigkeitsarten (27a, 27b, 27c, 27c) nach einem periodischen Muster auf die Kammern (18) verteilt ist.

10. Bauteil mit einer vor Vereisung zu schützenden Oberfläche,
**dadurch gekennzeichnet,**
**dass** diese Oberfläche (22) zumindest teilweise mit einer Folie gemäß einem der voranstehenden Ansprüche beschichtet ist.

11. Bauteil nach Anspruch 10,
**dadurch gekennzeichnet,**
**dass** das das Bauteil das Rotorblatt (11) einer Windturbine bildet.

12. Verfahren zum Erzeugen einer Folie,
**dadurch gekennzeichnet,**
**dass**
- zur Ausbildung von Kammern in der Folie eine Vielzahl Hohlräumen hergestellt wird,
- die Hohlräume über Füllkanäle (20) mit jeweils einer von mehreren Flüssigkeitsarten (27a, 27b, 27c, 27c) befüllt werden,
- die Hohlräume verschlossen werden, wobei abgeschlossene Kammern (18) entstehen,
- wobei die Flüssigkeitsarten (27a, 27b, 27c, 27c) die Gemeinsamkeit haben, dass ein Wechsel zwischen den Aggregatzuständen fest und flüssig mit einem Volumensprung verbunden ist und
- wobei die Flüssigkeitsarten (27a, 27b, 27c, 27c) sich dadurch unterscheiden, dass diese unterschiedliche Gefrierpunkte aufweisen.

13. Verfahren nach Anspruch 12,
**dadurch gekennzeichnet,**
**dass**
- schon vor dem Befüllen mit einer der Flüssigkeitsarten abgeschlossene Hohlräume gebildet werden und
- das Befüllen mit einer Kanüle vorgenommen wird, welche unter Ausbildung der Füllkanäle (20) in die Hohlräume hineingestochen wird.
